## Europäisches Patentamt

## European Patent Office

## Office européen des brevets

(19)

(11) Publication number: **0 088 513**
A1

(12) # EUROPEAN PATENT APPLICATION

(21) Application number: **83300522.6**

(22) Date of filing: **02.02.83**

(51) Int. Cl.³: **G 05 D 23/19**

(30) Priority: **26.02.82 US 352815**

(43) Date of publication of application: **14.09.83**
**Bulletin 83/37**

(84) Designated Contracting States: **DE FR GB IT NL SE**

(71) Applicant: **HONEYWELL INC., Honeywell Plaza, Minneapolis Minnesota 55408 (US)**

(72) Inventor: **Kabat, John L., 7508 W- 104th Street, Bloomington Minnesota 55438 (US)**

(74) Representative: **Riddle, John et al, Honeywell Control Systems Ltd. Patent Department Charles Square, Bracknell, Berks. (GB)**

(54) Control apparatus incorporating an electronic thermostat.

(57) A furnace control apparatus (23') incorporates a thermostat (13), a source of power (30) supplying power to the apparatus and thermostat, and a high impedence (50) which maintains power to the thermostat (13) regardless of the operation of control switch (34') of the apparatus.

EP 0 088 513 A1

## CONTROL APPARATUS INCORPORATING
## AN ELECTRONIC THERMOSTAT

With the advent of microelectronic thermostats having memories that need continuous energization to maintain the information stored therein, many schemes have been devised to maintain the energization of the memory should the power source be interrupted or should some control apparatus have a switching operation which interrupts the power to the thermostat. One scheme is to introduce in the thermostat circuit an electrical storage circuit making use of a capacitor to store a voltage that would be maintained upon the loss of a power source to the thermostat for a short period of time to keep the memory energized. Another scheme obviously would be to add a battery to the thermostat so that, upon the loss of the external power source, the battery would maintain the energization of the memory.

According to the invention, there is provided a control apparatus incorporating an electronic condition responsive means, the apparatus comprising a source of power connected to the apparatus and said means, and characterized in that a high impedence is provided to connect the source of power to the said means to maintain power to said means regardless of the operation of the control apparatus.

Embodiments of the invention will now be described, by way of example, with reference to the accompanying drawings, in which:-

Figure 1 shows a typical furnace with a stack damper control apparatus according to the present invention;

Figure 2 shows in more detail one embodiment of the furnace stack damper control apparatus of Figure 1; and

Figure 3 is a preferred embodiment of the furnace stack damper control apparatus of Figure 1.

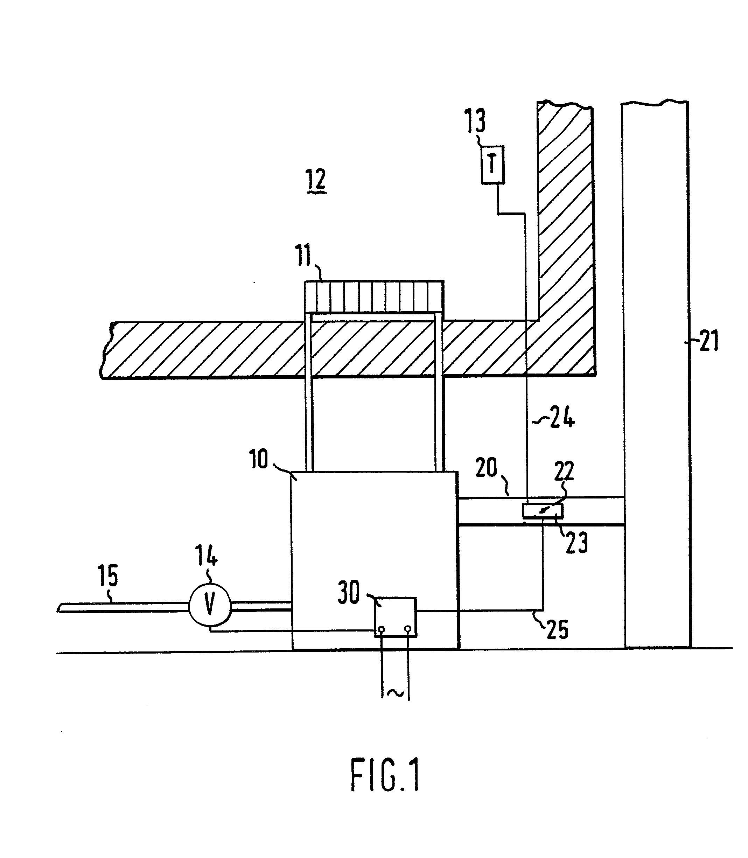

Referring to Figure 1, a fuel burning temperature conditioning apparatus, boiler or furnace 10 supplies a medium for heating to a radiator or heat exchanger 11 in a space 12 in which the temperature is being controlled in response to a condition or temperature responsive switch or thermostat 13 such as a T8100A Microelectronic Chronotherm Fuel Saver Thermostat and/or T8200A Microelectronic Chronotherm Fuel Saver Thermostat manufactured and sold by Honeywell Inc. The furnace has a gas valve 14 connected to a fuel source 15 (not shown), to supply fuel for combusion to furnace 10. The products of combustion exhaust from the furnace through an exhaust stack or flue 20 into a chimney 21.

Located in the exhaust stack 20 is a stack damper 22 which is controlled by a stack damper control unit 23 connected by circuit 24 to thermostat 13 and by circuit 25 to a transformer or source of power 30 and to gas valve 14.

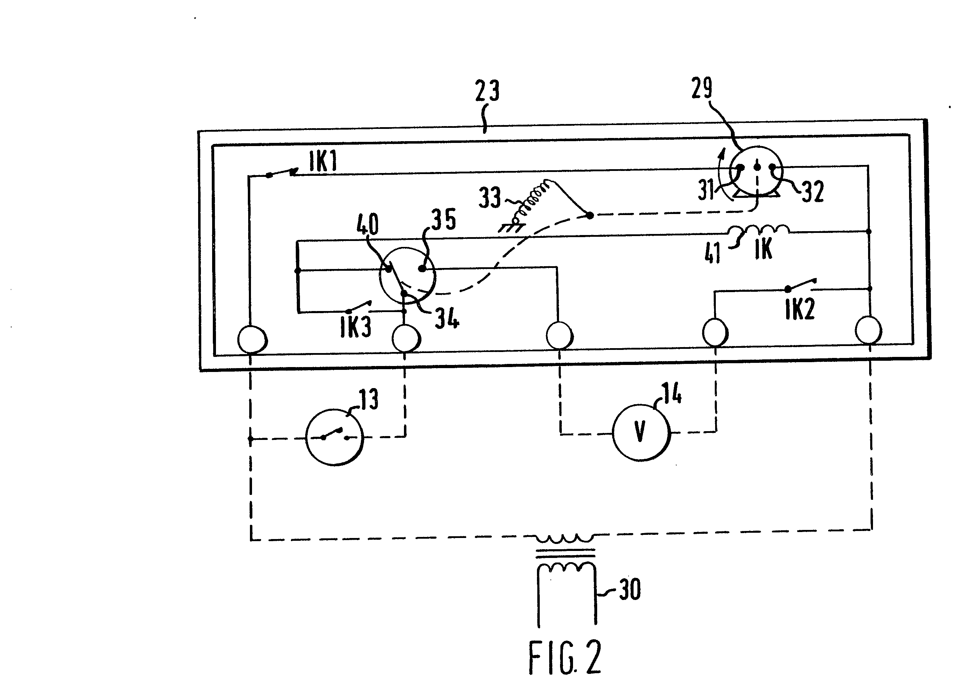

Referring to Figure 2, the furnace stack damper control unit 23 has a conventional electric motor 29 which is driven in one direction as indicated by the arrow to close the damper by an energization current at terminals 31 and 32. Motor 29 is a spring return motor which is driven in the opposite direction by a spring 33 for driving the damper open. One particular motor is sold by Honeywell Inc. as the M436A Damper Motor.

Movement of motor 29 also drives the movable contact of a switch 34 having normally open circuit contact 35 and normally closed circuit contact 40 of a conventional switch such as a V-3 series switch made by Honeywell Inc. A conventional relay 1K has an energization winding 41 and normally closed contacts 1K1 and two normally open sets of contacts 1K2 and 1K3.

When the stack damper control unit 23 is connected to the space thermostat 13 such as the mentioned T8100A and T8200A Thermostats and the gas valve 14 such as a V800 Combination Gas Control, also sold by Honeywell Inc., and powered by the output of the transformer 30, the circuit can be traced to provide the following operation. When thermostat 13 is closed, relay 1K is energized by source of power 30 by energization winding 41 through normally closed contact 40. The energization of relay 1K opens the contacts 1K1 to de-energize damper motor 29 which is normally energized to the closed position by the circuit from the power source through contacts 1K1, and which causes the damper 15 to move to an open position under the power of return spring 33. At the same time, the movable contact of switch 34 moves with the damper motor to open the normally closed contact 40 and close the normally open contact 35 to bring about energization of gas valve 14 from source of power 30 through the thermostat 13, the end switch contact 35, and back to the source of power through the 1K2 contacts now closed by energization of the relay 1K.

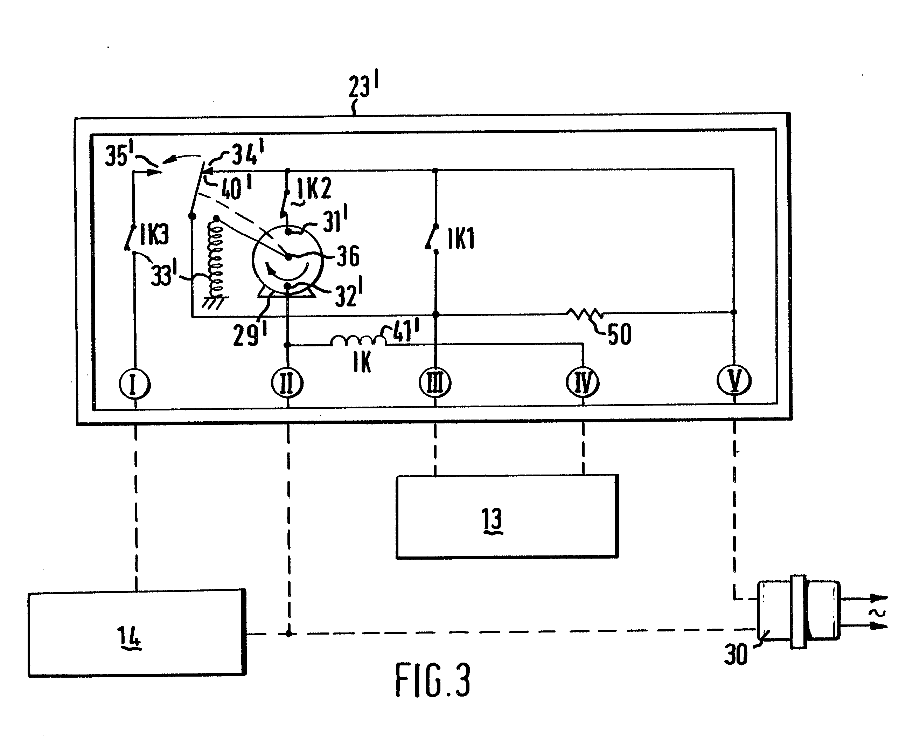

Referring to the preferred embodiment of Figure 3, furnace stack damper control unit 23' has a conventional electric motor 29', similar to motor 29, with an energization circuit between terminals 31' and 32' and an output shaft 36 adapted to be connected to a stack damper 22 as shown in Figure 1. Relay 1K has an energization winding 41' and normally closed contacts 1K2 and two normally open contacts 1K1 and 1K3 operated thereby. Motor 29' is a spring return motor having a return spring 33' connected to return output shaft 36 to a damper open position when the motor is de-energized. Movement of motor 29' drives the movable contact of a switch 34' between a normally open contact 35' and a normally closed contact 40'. Switch 34' operates near the last 10$^{\circ}$ of operation output shaft 36.

When the stack damper control unit 23' is connected as shown in Figure 3 to gas valve 14, space thermostat 13 and source of power 30 at the connection terminals I, II, III, IV and V, the following operation takes place. Upon a call for heat by space thermostat 13, relay 1K is energized by connecting source of power transformer 30 to the energization winding 41' in the following manner. From one side of the transformer 30 to terminal II, energization winding 41', to IV, thermostat 13, terminal III, normally closed contact 40' of the switch 34, and back to the transformer through terminal V. Upon the energization of relay 1K, relay contacts 1K2 open and the normally energized motor 29 which is energized to maintain damper 22 closed is de-energized and the damper motor returns under the power of the spring return 33' to a damper open position. At the same time, the movable contact of switch 34' is moved to close normally open contact 35' and open the normally closed contact 40'. Gas valve 14 is energized through the circuit from the transformer through gas valve 14, terminal I, the now closed relay contact 1K3, the now closed contact 35', the now closed relay contact 1K1, terminal V, and back to the source of power 30. Using contact 1K1 for the energization of valve 14 allows for only the relay energization current through winding 41' as the thermostat load.

When thermostat 13 is satisfied and relay 1K is de-energized, switch 1K2 closes to energize motor 29. Motor 29 has a loss motion mechanism as shown in the Thomas J. Butzen US Patent 4,262,652, issued April 21, 1981, and does not operate the switch 34' for a period of time, possibly one minute, before engaging the switch operator to close contact 40' and open contact 35'. During this one minute period, power source 30 is not connected to thermostat 13.

A resistor 50 of approximately 1000 ohms is placed between terminals III and V to maintain a low level leakage current from power supply 30 through space thermostat 13 and relay 1K at all times, regardless of the operation of the switches. As the space thermostat has a memory which must be continuously energized, if the thermostat circuit is broken even for a short time, the memory can be lost. Such is the case with thermostats such as the T8100 and/or T8200 previously mentioned.

While the use of a leakage current circuit is described in connection with an Exhaust Damper Control Apparatus, the invention is particularly applicable to other types of control apparatus which are controlled by condition responsive devices having memories which must be continuously energized.

## CLAIMS

1.  A control apparatus incorporating an electronic condition responsive means, the apparatus comprising a source of power connected to the apparatus and said means, and characterized in that a high impedence (50) is provided to connect the source of power (30) to said means (13) to maintain power to said means regardless of the operation of the control apparatus (23,23').

2.  The apparatus of Claim 1, characterized in that the condition responsive means is a space thermostat and the apparatus controls a furnace.

3.  The apparatus of Claim 2, characterized in that the thermostat has a memory which is maintained energized at all times via said high impedence.

4.  The apparatus of Claim 2 or 3, and connected to a damper in the exhaust stack of the furnace, characterized by an electric motor (29') operable when energized to drive the damper to a closed position; a return spring connected to said motor to drive the damper to an open position when the motor is de-energized; a relay (1K) connected in series with the thermostat and having two normally open pair of contacts (1K1 and 1K3) and a normally closed pair of contacts (1K2) controlled thereby; and a switch (34') driven by the motor and controlling two circuits, a first of said two circuits being selected when said motor is in an energized position and the damper closed, and a second of said two circuits being selected when said motor is in a de-energized position and the damper open, said first circuit being operative when selected to connect said relay in series with the thermostat and the source of power so that upon a call for heat by the thermostat said relay is energized; said normally closed contact pair being operable to connect said motor to the source of power whereby upon said relay being energized by a call for heat by the thermostat, the contact pair is opened to de-energize the motor and allow said return spring to drive said output to a damper open position; said second circuit including one of said normally open contact pairs (1K3) being operable in the de-energized condition of the motor to connect a fuel control of the furnace to the source of power for operating the furnace; second of said normally open contact pairs (1K1) being operable to maintain said relay energized while the motor is de-energized, and said high impedence (50) being connected between the thermostat and source of power to maintain a low current source to the thermostat during the change over operation of switch (34').

FIG.1

FIG. 2

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | FR-A-2 154 380 (M. PILATO)<br>* Page 3, lines 8-36; figure 2 *<br><br>--- | 1 | G 05 D 23/19 |
| A | FR-A-2 230 141 (LE COUTURIER)<br>* Page 2, lines 11-40; figure *<br><br>--- | 1,2 | |
| A | US-A-4 154 397 (E. CARLSON)<br>* Abstract; column 7, line 6 - column 8, line 14; figures 1,10 *<br><br>--- | 1-3 | |
| A | FR-A-1 381 461 (ELECTRO AB MICATRONE)<br>* Page 1, right-hand column, lines 5-23 *<br><br>--- | 4 | |
| A | EP-A-0 030 736 (SERVO-INSTRUMENT)<br><br>----- | | TECHNICAL FIELDS SEARCHED (Int. Cl. ³)<br><br>G 05 D<br>F 23 N |

The present search report has been drawn up for all claims

| Place of search | Date of completion of the search | Examiner |
|---|---|---|
| THE HAGUE | 08-06-1983 | HELOT H.V. |